# EUROPEAN PATENT APPLICATION

(11) **EP 4 436 069 A1**
(43) Date of publication of application: **25.09.2024**
(21) Application number: 22914289.8
(22) Date of filing: 15.12.2022
(51) Int. Cl.: H04B 17/30

(54) **FAILURE CAUSE DETERMINATION METHOD AND APPARATUS**

(30) Priority: 31.12.2021 CN 202111671182
(71) Applicant: Huawei Technologies Co., Ltd., Shenzhen, Guangdong 518129 (CN)
(72) Inventor: WANG, Qingjiang, Shenzhen, Guangdong 518129 (CN); XU, Jian, Shenzhen, Guangdong 518129 (CN); CHEN, Xin, Shenzhen, Guangdong 518129 (CN)
(74) Representative: Gill Jennings & Every LLP
(86) International application number: PCT/CN2022/139242
(87) International publication number: WO 2023/125034

(57) **Abstract**

Embodiments of this application provide a method and an apparatus for determining a fault cause, to quickly determine a fault cause of a link between a control device and a radio frequency device, so that a fault can be quickly rectified. The method may include: A first radio frequency device receives first information from a second radio frequency device, where the first information is for determining a fault cause of the second radio frequency device and/or a fault cause of a link between the second radio frequency device and a control device. The first radio frequency device sends the first information to the control device or a management device.

## Description

This application claims priority to Chinese Patent Application No. 202111671182.1, filed with the China National Intellectual Property Administration on December 31, 2021 and entitled "METHOD AND APPARATUS FOR DETERMINING FAULT CAUSE", which is incorporated herein by reference in its entirety.

### TECHNICAL FIELD

Embodiments of this application relate to the communication field, and more specifically, to a method and an apparatus for determining a fault cause.

### BACKGROUND

In an existing mobile communication system, most base stations use a remote radio technology, and a typical architecture of the base station includes baseband equipment and a radio frequency device. Usually, the baseband equipment is installed in an equipment room and is responsible for controlling and managing a plurality of radio frequency devices. The radio frequency device is responsible for converting a digital baseband signal into a radio frequency signal and transmitting a signal through an antenna. The baseband equipment and the radio frequency device are connected through an optical fiber to form a remote radio system architecture. To reduce a feeder loss between the radio frequency device and the antenna, during construction, both the radio frequency device and the antenna are installed on a tower, a pole, or a building at a high location. Once a communication link between the baseband equipment and the radio frequency device is faulty, a management system or the baseband equipment cannot remotely maintain the radio frequency device. In this case, maintenance personnel need to rectify the fault on site. In addition, many problems can be located and resolved only after data is obtained from the radio frequency device. This not only brings great inconvenience to problem resolving and affects troubleshooting efficiency, but also poses a threat to security of the maintenance personnel when the maintenance personnel climb to obtain the data.

### SUMMARY

Embodiments of this application provide a method and an apparatus for determining a fault cause, to quickly determine a fault cause of a link between a control device and a radio frequency device, so that a fault can be quickly rectified.

According to a first aspect, a method for determining a fault cause is provided. The method may include: A first radio frequency device receives first information from a second radio frequency device, where the first information is for determining a fault cause of the second radio frequency device and/or a fault cause of a link between the second radio frequency device and a control device. The first radio frequency device sends the first information to the control device or a management device.

Based on the foregoing technical solution, the first radio frequency device sends the first information received from the second radio frequency device to the control device or the management device, so that the control device or the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

The second radio frequency device is physically connected to the first radio frequency device. For example, the second radio frequency device is connected to the first radio frequency device through a power cable or an optical fiber.

For example, the first information includes one or more of the following: status information of an optical module, optical power of the optical module, software running information of the second radio frequency device, hardware running information of the second radio frequency device, and communication quality information of the link between the second radio frequency device and the control device, where the optical module is deployed on the second radio frequency device.

For another example, the first information includes the fault cause of the second radio frequency device or indication information indicating that the second radio frequency device is not faulty.

With reference to the first aspect, in some implementations of the first aspect, the method further includes: The first radio frequency device receives a first request message from the control device or the management device, where the first request message is for requesting to report the first information. In response to the first request message, the first radio frequency device sends a second request message, where the second request message is for requesting the second radio frequency device to report the first information.

For example, the second request message is sent in a broadcast manner.

Based on the foregoing technical solution, the first radio frequency device may determine, based on the received first request message, that a link between at least one radio frequency device and the control device is faulty, to prevent the first radio frequency device from sending the second request message when the link between the second radio frequency device and the control device is not faulty, thereby avoiding signaling waste.

With reference to the first aspect, in some implementations of the first aspect, the first request message includes an identifier of the second radio frequency device, and/or the second request message includes the identifier of the second radio frequency device.

With reference to the first aspect, in some implementations of the first aspect, the method further includes: The first radio frequency device receives a third request message from the second radio frequency device, where the third request message is for discovering a radio frequency device whose link to the control device is not faulty. In response to the third request message, the first radio frequency device sends a response message of the third request message to the second radio frequency device.

Based on the foregoing technical solution, in response to the third request message, the first radio frequency device sends the response message of the third request message to the second radio frequency device, so that the second radio frequency device may determine, based on the response message of the third request message, that a link between the first radio frequency device and the control device is not faulty. Therefore, the second radio frequency device may send the first information to the control device through the first radio frequency device.

With reference to the first aspect, in some implementations of the first aspect, the method further includes: The first radio frequency device receives a first request message from the control device or the management device, where the first request message is for requesting to report the first information. That the first radio frequency device sends the first information to the control device or a management device includes: In response to the first request message, the first radio frequency device sends the first information to the control device or the management device.

With reference to the first aspect, in some implementations of the first aspect, the method further includes: The first radio frequency device establishes a data transmission channel between the first radio frequency device and the second radio frequency device. That a first radio frequency device receives first information from a second radio frequency device includes: The first radio frequency device receives the first information through the data transmission channel.

According to a second aspect, a method for determining a fault cause is provided. The method may include: A second radio frequency device sends first information to a first radio frequency device, where the first information is for determining a fault cause of the second radio frequency device and/or a fault cause of a link between the second radio frequency device and a control device.

Based on the foregoing technical solution, the second radio frequency device sends the first information to the control device or a management device through the first radio frequency device, so that the control device or the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

The second radio frequency device is physically connected to the first radio frequency device. For example, the second radio frequency device is connected to the first radio frequency device through a power cable or an optical fiber.

For example, the first information includes one or more of the following: status information of an optical module, optical power of the optical module, software running information of the second radio frequency device, hardware running information of the second radio frequency device, and communication quality information of the link between the second radio frequency device and the control device, where the optical module is deployed on the second radio frequency device.

For another example, the first information includes the fault cause of the second radio frequency device or indication information indicating that the second radio frequency device is not faulty.

With reference to the second aspect, in some implementations of the second aspect, the method further includes: The second radio frequency device determines that the second radio frequency device is faulty and/or the link between the second radio frequency device and the control device is faulty.

With reference to the second aspect, in some implementations of the second aspect, the method further includes: The second radio frequency device receives a second request message from the first radio frequency device, where the second request message is for requesting to report the first information.

Based on the foregoing technical solution, the second radio frequency device may determine, based on the second request message, that a link between the first radio frequency device and the control device is not faulty, so that the first information may be sent to the control device through the first radio frequency device, and the second radio frequency device may also be prevented from sending the first information to a radio frequency device whose link to the control device is faulty.

With reference to the second aspect, in some implementations of the second aspect, the method further includes: The second radio frequency device sends a third request message, where the third request message is for discovering a radio frequency device whose link to the control device is not faulty. The second radio frequency device receives a response message that is of the third request message and that is from the first radio frequency device.

Based on the foregoing technical solution, the second radio frequency device may discover, by sending the third request message, the first radio frequency device whose link to the control device is not faulty, so that the first information may be sent to the control device through the first radio frequency device, and the second radio frequency device may also be prevented from sending the first information to a radio frequency device whose link to the control device is faulty.

With reference to the second aspect, in some implementations of the second aspect, the method further includes: The second radio frequency device establishes a data transmission channel between the second radio frequency device and the first radio frequency device. That a second radio frequency device sends first information to a second radio frequency device includes: The second radio frequency device sends the first information to the second radio frequency device through the data transmission channel.

According to a third aspect, a method for determining a fault cause is provided. The method may include: receiving first information from a first radio frequency device, where the first information is for determining a fault cause of a second radio frequency device and/or a fault cause of a link between the second radio frequency device and a control device, and determining, based on the first information, the fault cause of the second radio frequency device and/or the fault cause of the link between the second radio frequency device and the control device.

Based on the foregoing technical solution, the control device or a management device may receive the first information through the first radio frequency device, so that the control device or the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

The second radio frequency device is physically connected to the first radio frequency device. For example, the second radio frequency device is connected to the first radio frequency device through a power cable or an optical fiber.

For example, the first information includes one or more of the following: status information of an optical module, optical power of the optical module, software running information of the second radio frequency device, hardware running information of the second radio frequency device, and communication quality information of the link between the second radio frequency device and the control device, where the optical module is deployed on the second radio frequency device.

For another example, the first information includes the fault cause of the second radio frequency device or indication information indicating that the second radio frequency device is not faulty.

With reference to the third aspect, in some implementations of the third aspect, the method further includes: sending a first request message to the first radio frequency device, where the first request message is for requesting to report the first information.

For example, the first request message is sent to the first radio frequency device when it is determined that the link between the second radio frequency device and the control device is faulty.

For example, the first request message includes an identifier of the second radio frequency device.

According to a fourth aspect, an apparatus is provided. The apparatus includes a transceiver unit. The transceiver unit is configured to receive first information from a second radio frequency device, where the first information is for determining a fault cause of the second radio frequency device and/or a fault cause of a link between the second radio frequency device and a control device. The transceiver unit is further configured to send the first information to the control device or a management device.

With reference to the fourth aspect, in some implementations of the fourth aspect, the apparatus is connected to a first radio frequency device through a power cable or an optical fiber.

With reference to the fourth aspect, in some implementations of the fourth aspect, the transceiver unit is further configured to receive a first request message from the control device or the management device, where the first request message is for requesting to report the first information. The transceiver unit is further configured to: in response to the first request message, send a second request message, where the second request message is for requesting the second radio frequency device to report the first information.

With reference to the fourth aspect, in some implementations of the fourth aspect, the first request message includes an identifier of the second radio frequency device, and/or the second request message includes the identifier of the second radio frequency device.

With reference to the fourth aspect, in some implementations of the fourth aspect, the second request message is sent in a broadcast manner.

With reference to the fourth aspect, in some implementations of the fourth aspect, the transceiver unit is further configured to receive a third request message from the second radio frequency device, where the third request message is for discovering a radio frequency device whose link to the control device is not faulty. The transceiver unit is further configured to: in response to the third request message, send a response message of the third request message to the second radio frequency device.

With reference to the fourth aspect, in some implementations of the fourth aspect, the transceiver unit is further configured to receive a first request message from the control device or the management device, where the first request message is for requesting to report the first information. The transceiver unit is further configured to: in response to the first request message, send the first information to the control device or the management device.

With reference to the fourth aspect, in some implementations of the fourth aspect, the apparatus further includes a processing unit. The processing unit is configured to establish a data transmission channel between the processing unit and the second radio frequency device. The transceiver unit is further configured to receive the first information through the data transmission channel.

With reference to the fourth aspect, in some implementations of the fourth aspect, the first information includes one or more of the following: status information of an optical module, optical power of the optical module, software running information of the second radio frequency device, hardware running information of the second radio frequency device, and communication quality information of the link between the second radio frequency device and the control device, where the optical module is deployed on the second radio frequency device.

With reference to the fourth aspect, in some implementations of the fourth aspect, the first information includes the fault cause of the second radio frequency device or indication information indicating that the second radio frequency device is not faulty.

According to a fifth aspect, an apparatus is provided. The apparatus includes a transceiver unit. The transceiver unit is configured to send first information to a first radio frequency device, where the first information is for determining a fault cause of a second radio frequency device and/or a fault cause of a link between the second radio frequency device and a control device.

With reference to the fifth aspect, in some implementations of the fifth aspect, the second radio frequency device is connected to the first radio frequency device through a power cable or an optical fiber.

With reference to the fifth aspect, in some implementations of the fifth aspect, the apparatus further includes a processing unit. The processing unit is configured to determine that the second radio frequency device is faulty and/or the link between the second radio frequency device and the control device is faulty.

With reference to the fifth aspect, in some implementations of the fifth aspect, the transceiver unit is further configured to receive a second request message from the first radio frequency device, where the second request message is for requesting to report the first information.

With reference to the fifth aspect, in some implementations of the fifth aspect, the transceiver unit is further configured to send a third request message, where the third request message is for discovering a radio frequency device whose link to the control device is not faulty. The transceiver unit is further configured to receive a response message that is of the third request message and that is from the first radio frequency device.

With reference to the fifth aspect, in some implementations of the fifth aspect, the processing unit is further configured to establish a data transmission channel between the processing unit and the first radio frequency device. The transceiver unit is further configured to send the first information to the second radio frequency device through the data transmission channel.

With reference to the fifth aspect, in some implementations of the fifth aspect, the first information includes one or more of the following: status information of an optical module, optical power of the optical module, software running information of the second radio frequency device, hardware running information of the second radio frequency device, and communication quality information of the link between the second radio frequency device and the control device, where the optical module is deployed on the second radio frequency device.

With reference to the fifth aspect, in some implementations of the fifth aspect, the first information includes the fault cause of the second radio frequency device or indication information indicating that the second radio frequency device is not faulty.

According to a sixth aspect, an apparatus is provided. The apparatus includes a transceiver unit and a processing unit. The transceiver unit is configured to receive first information from a first radio frequency device, where the first information is for determining a fault cause of a second radio frequency device and/or a fault cause of a link between the second radio frequency device and a control device. The processing unit is configured to determine, based on the first information, the fault cause of the second radio frequency device and/or the fault cause of the link between the second radio frequency device and the control device.

With reference to the sixth aspect, in some implementations of the sixth aspect, the second radio frequency device is connected to the first radio frequency device through a power cable or an optical fiber.

With reference to the sixth aspect, in some implementations of the sixth aspect, the transceiver unit is further configured to send a first request message to the first radio frequency device, where the first request message is for requesting to report the first information.

With reference to the sixth aspect, in some implementations of the sixth aspect, when determining that the link between the second radio frequency device and the control device is faulty, the transceiver unit is configured to send the first request message to the first radio frequency device.

With reference to the sixth aspect, in some implementations of the sixth aspect, the first request message includes an identifier of the second radio frequency device.

With reference to the sixth aspect, in some implementations of the sixth aspect, the first information includes one or more of the following: status information of an optical module, optical power of the optical module, software running information of the second radio frequency device, hardware running information of the second radio frequency device, and communication quality information of the link between the second radio frequency device and the control device, where the optical module is deployed on the second radio frequency device.

With reference to the sixth aspect, in some implementations of the sixth aspect, the first information includes the fault cause of the second radio frequency device or indication information indicating that the second radio frequency device is not faulty.

According to a seventh aspect, this application provides an apparatus, including a processor. The processor is coupled to a memory, and may be configured to execute instructions in the memory, to implement the method in any one of the first aspect or the possible implementations of the first aspect. The apparatus further includes the memory. The apparatus further includes a communication interface, and the processor is coupled to the communication interface.

In an implementation, the apparatus is a first radio frequency device. When the apparatus is the first radio frequency device, the communication interface may be a transceiver or an input/output interface.

In another implementation, the apparatus is a chip or a chip system disposed in the first radio frequency device. When the apparatus is the chip or the chip system disposed in the first radio frequency device, the communication interface may be an input/output interface.

The transceiver may be a transceiver circuit. The input/output interface may be an input/output circuit.

According to an eighth aspect, this application provides an apparatus, including a processor. The processor is coupled to a memory, and may be configured to execute instructions in the memory, to implement the method in any one of the second aspect or the possible implementations of the second aspect. The apparatus further includes the memory. The apparatus further includes a communication interface, and the processor is coupled to the communication interface.

In an implementation, the apparatus is a second radio frequency device. When the apparatus is the second radio frequency device, the communication interface may be a transceiver or an input/output interface.

In another implementation, the apparatus is a chip or a chip system disposed in the second radio frequency device. When the apparatus is the chip or the chip system disposed in the second radio frequency device, the communication interface may be an input/output interface.

The transceiver may be a transceiver circuit. The input/output interface may be an input/output circuit.

According to a ninth aspect, this application provides an apparatus, including a processor. The processor is coupled to a memory, and may be configured to execute instructions in the memory, to implement the method in any one of the third aspect or the possible implementations of the third aspect. The apparatus further includes the memory. The apparatus further includes a communication interface, and the processor is coupled to the communication interface.

In an implementation, the apparatus is a control device or a management device. When the apparatus is the control device or the management device, the communication interface may be a transceiver or an input/output interface.

In another implementation, the apparatus is a chip or a chip system disposed in the control device or the management device. When the apparatus is the chip or the chip system disposed in the control device or the management device, the communication interface may be an input/output interface.

The transceiver may be a transceiver circuit. The input/output interface may be an input/output circuit.

According to a tenth aspect, this application provides a processor, including an input circuit, an output circuit, and a processing circuit. The processing circuit is configured to: receive a signal through the input circuit, and transmit a signal through the output circuit, to enable the processor to perform the methods in the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to an eleventh aspect, this application provides a processing apparatus, including a communication interface and a processor. The communication interface is coupled to the processor. The communication interface is configured to input and/or output information. The information includes at least one of instructions or data. The processor is configured to execute a computer program, to enable the processing apparatus to perform the methods in the foregoing aspects.

According to a twelfth aspect, this application provides a processing apparatus, including a processor and a memory. The processor is configured to: read instructions stored in the memory, receive a signal by using a receiver, and transmit a signal by using a transmitter, to enable the processing apparatus to perform the methods in the foregoing aspects.

Optionally, there are one or more processors. If there is a memory, there may also be one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be separately disposed on different chips. A type of the memory and a manner of disposing the memory and the processor are not limited in this embodiment of this application.

It should be understood that in a related information exchange process, for example, sending indication information may be a process of outputting the indication information from the processor, and receiving indication information may be a process of inputting the received indication information to the processor. Specifically, information output by the processor may be output to the transmitter, and input information received by the processor may be from the receiver. The transmitter and the receiver may be collectively referred to as a transceiver.

The apparatuses in the eleventh aspect and the twelfth aspect may each be a chip. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a thirteenth aspect, this application provides a computer program product. The computer program product includes a computer program (which may also be referred to as code or instructions). When the computer program is run, a computer is enabled to perform the methods in the foregoing aspects.

According to a fourteenth aspect, this application provides a computer-readable storage medium. The computer-readable storage medium stores a computer program (which may also be referred to as code or instructions). When the computer program is run on a computer, the computer is enabled to perform the methods in the foregoing aspects.

According to a fifteenth aspect, this application provides a system, including the foregoing first radio frequency device, the second radio frequency device, and the control device. Optionally, the system further includes the foregoing management device.

### BRIEF DESCRIPTION OF DRAWINGS

FIG. 1 is a schematic diagram of a system applicable to a method according to an embodiment of this application;
FIG. 2 is a schematic diagram of a communication link between a baseband module and a radio frequency module;
FIG. 3 is a schematic flowchart of a method according to an embodiment of this application;
FIG. 4 is a schematic diagram in which a radio frequency device is connected through a power cable or an optical fiber;
FIG. 5 is a schematic flowchart of a method according to an embodiment of this application;
FIG. 6 is a schematic flowchart of a method according to an embodiment of this application;
FIG. 7 is a schematic flowchart of a method according to an embodiment of this application;
FIG. 8 is a schematic block diagram of an apparatus according to an embodiment this application;
FIG. 9 is a schematic diagram of a structure of an apparatus according to an embodiment of this application; and
FIG. 10 is a schematic diagram of a chip system according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an Internet of Things (Internet of Things, IoT) communication system, a vehicle to everything (vehicle to everything, V2X) communication system, an uncrewed aerial vehicle (uncrewed aerial vehicle, UAV) communication system, or another communication system.

In the descriptions of this application, "/" indicates an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in the descriptions of this application, unless otherwise specified, "a plurality of means two or more than two. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be one or more.

In addition, to clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference either. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

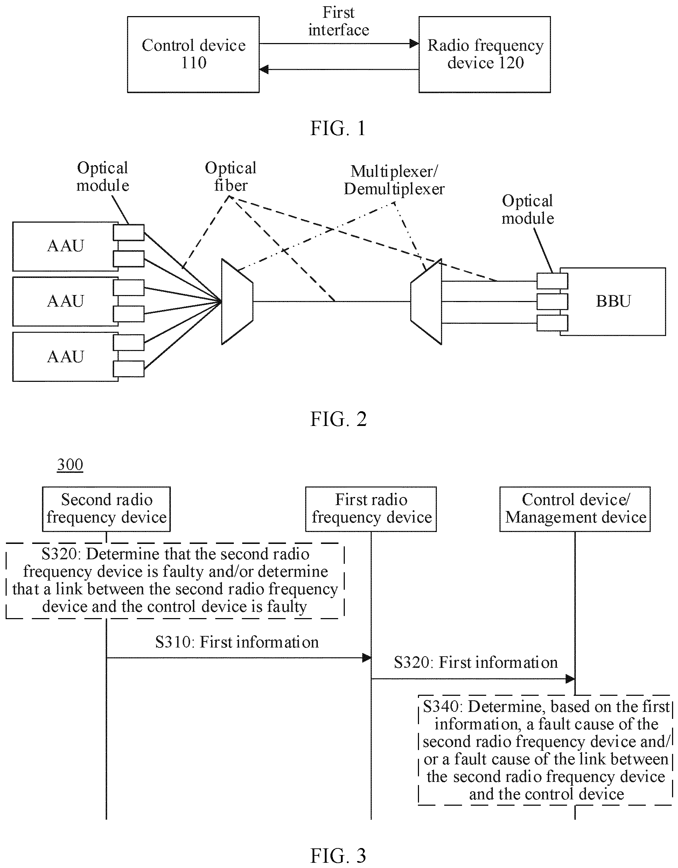

For ease of understanding of embodiments of this application, one application scenario of embodiments of this application is first described in detail with reference to FIG. 1.

FIG. 1 shows a system architecture applicable to a method according to an embodiment of this application. As shown in FIG. 1, the system includes a control device 110 and a radio frequency device 120. The control device 110 may serve as a primary device of a base station, process a digital baseband signal, and provide control and management for a function of each device of the base station. The radio frequency device 120 may serve as a radio frequency module of the base station, and may be configured to process an intermediate frequency signal and/or a radio frequency signal, or may be configured to receive and transmit a radio signal.

The control device 110 is connected to the radio frequency device 120 through a first interface. The first interface may be any one of the following interfaces: a common public radio interface (common public radio interface, CPRI), an enhanced CPRI (enhanced CPRI, eCPRI) interface, or a future-defined interface that is configured to connect a control device and a radio frequency device. For example, the first interface may be referred to as a fronthaul (fronthaul) interface.

It should be noted that specific types of the control device 110 and the radio frequency device 120 are not limited in this embodiment of this application. Any two devices connected through the first interface may be equivalent to the control device 110 and the radio frequency device 120 in this embodiment of this application. For example, the control device 110 may be any one of the following: a baseband unit (baseband unit, BBU), a distributed unit (distributed unit, DU), or a centralized unit (centralized unit, CU). For example, the radio frequency device 120 may be any one of the following: a radio remote unit (radio remote unit, RRU), a radio unit (radio unit, RU), or an active antenna unit (active antenna unit, AAU).

In some deployments, the control device 110 may include a centralized unit (centralized unit, CU) and a DU, where the DU is connected to the radio frequency device 120 through the first interface. Further, the CU may alternatively use an architecture in which a control plane (control plane, CP) and a user plane (user plane, UP) are separated. That is, the CU may include a CU-CP entity and a CU-UP entity.

It should be further noted that, in FIG. 1, only an example in which the control device 110 is connected to one radio frequency device 120 is used, and the control device 110 may alternatively be connected to more radio frequency devices.

Usually, a baseband module is installed in an equipment room and is responsible for controlling and managing a plurality of radio frequency modules. The baseband module is connected to the radio frequency module through an optical fiber, to form a remote radio system architecture. As shown in FIG. 2, on a communication link between the radio frequency module (for example, an AAU) and the baseband module (for example, a BBU), there are a large quantity of nodes and various devices (for example, an optical module), and many of them are passive devices. Therefore, a fronthaul link is a weakest part on the base station, and is also a place in which a fault is most likely to occur. Once the communication link between the radio frequency module and the baseband module is faulty, the fault needs to be manually located at a radio frequency site. In addition, a place in which the fault specifically occurs cannot be remotely known. Therefore, the maintenance personnel can only take all devices (such as a radio frequency module, an optical module, and an optical fiber) and a detection instrument to the site and replace the devices one by one to locate and rectify the fault. Therefore, fault locating efficiency is exceedingly low, a fault recovery period is long, and service interruption time is long.

In view of this, embodiments of this application provide a method for determining a fault cause, to quickly determine a fault cause of a fronthaul link, so that a fault can be quickly rectified.

FIG. 3 is a schematic flowchart of a method for determining a fault cause according to an embodiment of this application. The following describes in detail steps included in the method 300.

S310: A second radio frequency device sends first information to a first radio frequency device. Correspondingly, in S310, the first radio frequency device receives the first information from the second radio frequency device.

For example, the second radio frequency device is an RRU, an RU, or an AAU, and the second radio frequency device is an RRU, an RU, or an AAU.

The first information is for determining a fault cause of the second radio frequency device and/or a fault cause of a link between the first radio frequency device and a control device. For ease of description, the link between the second radio frequency device and the control device is denoted as a first link below. For example, the control device is a BBU, a BU, a CU, or a DU.

For example, the first information includes one or more of the following: status information of a first optical module deployed on the second radio frequency device, optical power of the first optical module, hardware running information of the second radio frequency device, software running information of the second radio frequency device, and communication quality information of the first link.

The status information of the first optical module includes one or more of the following: a temperature of the first optical module, a voltage of the first optical module, and a current of the first optical module. The status information of the first optical module is for determining whether the first optical module is faulty.

The optical power of the first optical module includes transmit optical power and receive optical power of the first optical module. The transmit optical power of the first optical module is power of an optical signal sent by the second radio frequency device to the control device through the first optical module, and the receive optical power of the first optical module is power of an optical signal received by the second radio frequency device from the control device through the first optical module. The transmit optical power of the first optical module is for determining whether a transmit end of the first optical module is faulty, and the receive optical power of the first optical module is for determining whether a receive end of the first optical module is faulty.

The hardware running information of the second radio frequency device is running information of a hardware structure of the second radio frequency device, and may specifically include a running parameter obtained when the hardware structure is run. For example, the hardware running information of the second radio frequency device includes a running memory of the second radio frequency device, a hardware temperature of the second radio frequency device, an occupation rate of a flash (Flash) chip of the second radio frequency device, and a bad block rate of the flash chip of the second radio frequency device. The hardware running information of the second radio frequency device is for determining whether hardware of the second radio frequency device runs abnormally.

The software running information of the second radio frequency device includes version information about software running on the second radio frequency device, software version information supported by the second radio frequency device, a cyclic redundancy check (cyclic redundancy check, CRC) check result, alarm information indicating a file loss, and alarm information indicating software damage. The software running information of the second radio frequency device is for determining whether the software of the second radio frequency device runs abnormally.

The communication quality information of the first link includes one or more of the following: a packet loss rate of the first link, a bit error rate of the first link, a transmission delay of the first link, and optical attenuation of the first link. Communication quality of the first link is for determining whether the first link is faulty.

The second radio frequency device may send the first information to the first radio frequency device in a wired transmission manner. It may be understood that, when the second radio frequency device is physically connected to the first radio frequency device, the second radio frequency device may send the first information to the first radio frequency device in the wired transmission manner.

A manner of physically connecting the first radio frequency device to the second radio frequency device is not limited in this embodiment of this application.

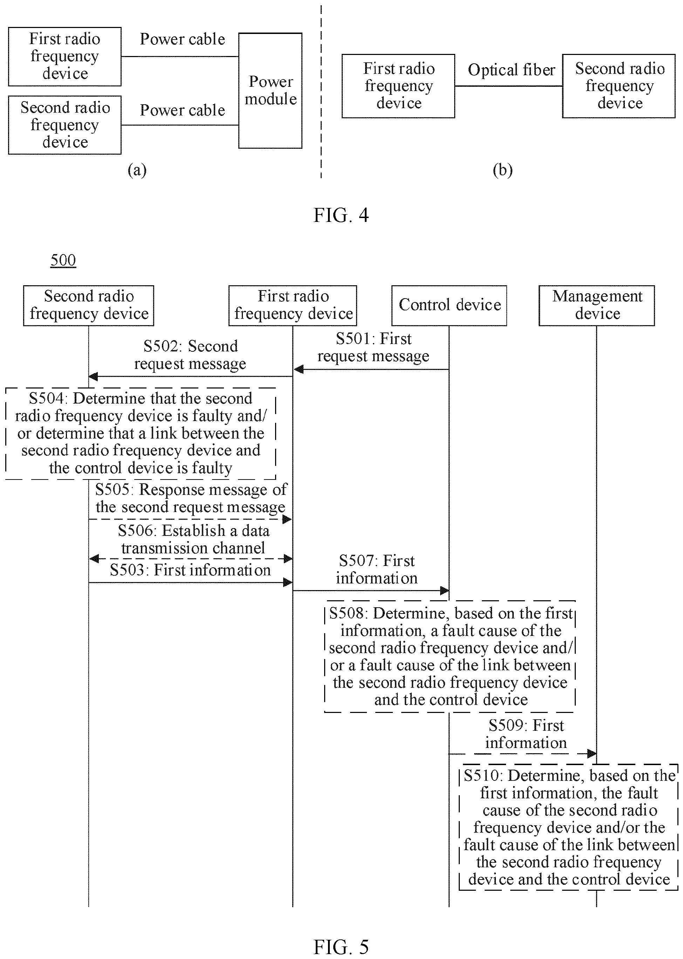

In a possible implementation, the first radio frequency device is connected to the second radio frequency device through a power cable. As shown in (a) in FIG. 4, the first radio frequency device and the second radio frequency device are connected to a same power module through power cables. In this case, the first radio frequency device and the second radio frequency device may form a physical connection through the power cables, and the first radio frequency device and the second radio frequency device may perform wired transmission through the power cables. It should be noted that, in (a) in FIG. 4, only an example in which the power module is connected to the first radio frequency device and the second radio frequency device is used. In addition to the first radio frequency device and the second radio frequency device, there may be more other radio frequency devices that are connected to the power module through power cables.

In another possible implementation, the first radio frequency device is connected to the second radio frequency device through an optical fiber. As shown in (b) in FIG. 4, the first radio frequency device is connected to the second radio frequency device through the optical fiber. In this case, the first radio frequency device and the second radio frequency device may form a physical connection through the optical fiber, and the first radio frequency device and the second radio frequency device may perform wired transmission through the optical fiber. It should be noted that, in (b) in FIG. 4, only an example in which the first radio frequency device is connected to the second radio frequency device through the optical fiber is used, and there may be more other radio frequency devices that are connected to the first radio frequency device and the second radio frequency device through optical fibers.

An occasion at which the second radio frequency device sends the first information to the first radio frequency device is not limited in this embodiment of this application.

In a possible implementation, the second radio frequency device sends the first information to the first radio frequency device once determining that the second radio frequency device is faulty and/or determining that the first link is faulty.

Optionally, before S310, the method 300 further includes S320: The second radio frequency device determines that the second radio frequency device is faulty and/or determines that the link between the second radio frequency device and the control device is faulty.

The fault that occurs in the second radio frequency device may be at least one of the following: a fault that occurs in the first optical module, a hardware running exception of the second radio frequency device, and a software running exception of the second radio frequency device.

For example, the second radio frequency device may determine, based on the stored status information of the first optical module, whether the first optical module is faulty. For example, if the temperature of the first optical module is lower than a lower temperature limit of the first optical module, and/or the temperature of the first optical module is higher than an upper temperature limit of the first optical module, the second radio frequency device may determine that the first optical module is faulty. For another example, if the current of the first optical module is lower than a lower current limit of the first optical module, and/or the current of the first optical module is higher than an upper current limit of the first optical module, the second radio frequency device may determine that the first optical module is faulty. For another example, if the voltage of the first optical module is lower than a lower voltage limit of the first optical module, and/or the voltage of the first optical module is higher than an upper voltage limit of the first optical module, the second radio frequency device may determine that the first optical module is faulty. If the temperature of the first optical module is between the lower temperature limit of the first optical module and the upper temperature limit of the first optical module, the current of the first optical module is between the lower current limit of the first optical module and the upper current limit of the first optical module, and the voltage of the first optical module is between the lower voltage limit of the first optical module and the upper voltage limit of the first optical module, the second radio frequency device may determine that the first optical module is not faulty.

The second radio frequency device may further determine, based on the optical power of the first optical module, whether the transmit end and/or the receive end of the first optical module are/is faulty. For example, if the transmit optical power of the first optical module is lower than minimum output optical power of the first optical module, and/or if the transmit optical power of the first optical module is higher than maximum output optical power of the first optical module, the second radio frequency device may determine that the transmit end of the first optical module is faulty. If the transmit optical power of the first optical module is between the minimum output optical power and the maximum output optical power of the first optical module, the second radio frequency device may determine that the transmit end of the first optical module is not faulty. For another example, if the receive optical power of the first optical module is lower than minimum receive optical power of the first optical module, and/or if the receive optical power of the first optical module is higher than maximum receive optical power of the first optical module, the second radio frequency device may determine that the receive end of the first optical module is faulty. If the receive optical power of the first optical module is between the minimum receive optical power and the maximum receive optical power of the first optical module, the second radio frequency device may determine that the receive end of the first optical module is not faulty.

The second radio frequency device may determine, based on the stored hardware running information of the second radio frequency device, whether the hardware of the second radio frequency device runs abnormally. For example, if the running memory of the second radio frequency device is lower than a lower running memory limit, or is higher than an upper running memory limit, the second radio frequency device may determine that the second radio frequency device runs abnormally. Alternatively, if the hardware temperature of the second radio frequency device is lower than a lower hardware temperature limit, or the hardware temperature of the second radio frequency device is higher than a lower hardware temperature limit, the second radio frequency device may determine that the hardware of the second radio frequency device runs abnormally. Alternatively, if the occupation rate of the flash chip of the second radio frequency device is higher than an upper occupation rate limit, the second radio frequency device may determine that the hardware of the second radio frequency device runs abnormally. Alternatively, if the bad block rate of the flash chip of the second radio frequency device is higher than an upper bad block rate limit, the second radio frequency device may determine that the hardware of the second radio frequency device runs abnormally. If the running memory of the second radio frequency device is between the upper running memory limit and the lower running memory limit, the hardware temperature of the second radio frequency device is between the lower hardware temperature limit and the upper hardware temperature limit, the occupation rate of the flash chip of the second radio frequency device is lower than the upper occupation rate limit, and the bad block rate of the flash chip of the second radio frequency device is lower than the upper bad block rate limit, the second radio frequency device determines that the hardware of the second radio frequency device runs normally.

The second radio frequency device may determine, based on the stored software running information of the second radio frequency device, whether the software of the second radio frequency device runs abnormally. For example, if the second radio frequency device determines, based on the version information about the software running on the second radio frequency device and the software version information supported by the second radio frequency device, that a version of the running software is incompatible with a version of software supported by the second radio frequency device, the second radio frequency device determines that the software of the second radio frequency device runs abnormally. If the second radio frequency device determines, based on the CRC check result, that CRC check fails, the second radio frequency device determines that the software of the second radio frequency device runs abnormally. If the software running information of the second radio frequency device includes the alarm information indicating the file loss and/or the alarm information indicating the software damage, the second radio frequency device determines that the software of the second radio frequency device runs abnormally. If the version of the running software is compatible with the version of the software supported by the second radio frequency device, the second radio frequency device determines, based on the CRC check result, that the CRC check succeeds, and the software running information of the second radio frequency device does not include the alarm information indicating the file loss or the alarm information indicating the software damage, the second radio frequency device determines that the software of the second radio frequency device runs normally.

The fault that occurs in the first link may be an interruption fault or a link quality fault. This is not limited in this embodiment of this application. It should be understood that, regardless of whether the interruption fault or the link quality fault occurs in the first link, neither the second radio frequency device nor the control device can normally communicate with each other through the first link.

For example, the second radio frequency device determines, based on the communication quality of the first link, whether the first link is faulty. For example, if the second radio frequency device does not receive data or an instruction from the control device within predefined duration, the second radio frequency device may determine that the interruption fault occurs in the first link. For another example, if the second radio frequency device fails to send data to the control device, the second radio frequency device may determine that the interruption fault occurs in the first link. For another example, although the second radio frequency device receives data or an instruction from the control device, the second radio frequency device cannot correctly parse the received data or instruction. Therefore, the second radio frequency device may determine that the link quality fault occurs in the first link. For another example, if the packet loss rate of the first link exceeds a packet loss rate threshold, the second radio frequency device may determine that the link quality fault occurs in the first link. For another example, if the transmission delay of the first link exceeds a delay threshold, the second radio frequency device may determine that the link quality fault occurs in the first link. For another example, if the bit error rate of the first link exceeds a bit error rate threshold, the second radio frequency device may determine that the link quality fault occurs in the first link. For another example, if the optical attenuation of the first link exceeds an upper optical attenuation limit, the second radio frequency device may determine that the link quality fault occurs in the first link.

Optionally, in S320, the second radio frequency device may determine that the second radio frequency device is about to be faulty, and/or determine that the first link is about to be faulty.

For example, the second radio frequency device may determine, based on the status information of the first optical module, that the first optical module is about to be faulty. For example, if the temperature of the first optical module is close to the lower temperature limit of the first optical module or close to the upper temperature limit of the first optical module, the second radio frequency device may determine that the first optical module is about to be faulty.

For another example, the second radio frequency device may determine, based on the optical power of the first optical module, that the transmit end and/or the receive end of the first optical module are/is about to be faulty. For example, if the transmit optical power of the first optical module is close to the maximum output optical power of the first optical module or close to the minimum output optical power of the first optical module, the second radio frequency device may determine that the transmit end of the first optical module is about to be faulty.

For another example, the second radio frequency device may determine, based on the hardware running information of the second radio frequency device, that the hardware of the second radio frequency device is about to run abnormally. For example, if the running memory of the second radio frequency device is close to the upper running memory limit, the second radio frequency device may determine that the hardware of the second radio frequency device is about to run abnormally. For another example, if the hardware temperature of the second radio frequency device is close to the upper hardware temperature limit, the second radio frequency device may determine that the hardware of the second radio frequency device is about to run abnormally.

For example, the second radio frequency device determines, based on the communication quality of the first link, whether the first link is about to be faulty. For example, if the packet loss rate of the first link exceeds the packet loss rate threshold, the second radio frequency device may determine that the link quality fault or the interruption fault is about to occur in the first link. For example, if the bit error rate of the first link exceeds the bit error rate threshold, the second radio frequency device may determine that the link quality fault or the interruption fault is about to occur in the first link. For example, if the transmission delay of the first link exceeds the delay threshold, the second radio frequency device may determine that the link quality fault or the interruption fault is about to occur in the first link. For example, if the optical attenuation of the first link is close to the upper optical attenuation limit, the second radio frequency device may determine that the link quality fault or the interruption fault is about to occur in the first link.

For example, the second radio frequency device may further determine, by monitoring a change of a voltage and/or a current of the second radio frequency device, whether a power failure is about to occur. If the voltage of the second radio frequency device is close to a lower voltage limit and/or the current is close to a lower current limit, it is determined that the power failure is about to occur in the second radio frequency device.

Further, if the second radio frequency device determines that the first radio frequency device is faulty, and/or determines that the link between the second radio frequency device and the control device is faulty, the first radio frequency device sends the first information to the second radio frequency device.

Optionally, in S320, if the second radio frequency device determines, based on the status information of the first optical module, that the first optical module is faulty, the first information may include the status information of the first optical module. In S320, if the second radio frequency device determines, based on the status information of the first optical module, that the first optical module is not faulty, the first information may not include the status information of the first optical module.

Optionally, in S320, if the second radio frequency device determines, based on the optical power of the first optical module, that the transmit end and/or the receive end of the first optical module are/is faulty, the first information includes the optical power of the first optical module. In S320, if the second radio frequency device determines, based on the optical power of the first optical module, that the transmit end and the receive end of the first optical module are not faulty, the first information may not include the optical power of the first optical module.

Optionally, in S320, if the second radio frequency device determines, based on the hardware running information of the second radio frequency device, that the hardware of the second radio frequency device runs abnormally, the first information includes the hardware running information of the second radio frequency device. In S320, if the second radio frequency device determines, based on the hardware running information of the second radio frequency device, that the hardware of the second radio frequency device runs normally, the first information may not include the hardware running information of the second radio frequency device.

Optionally, in S320, if the second radio frequency device determines, based on the software running information of the second radio frequency device, that the software of the second radio frequency device runs abnormally, the first information includes the software running information of the second radio frequency device. In S320, if the second radio frequency device determines, based on the software running information of the second radio frequency device, that the software of the second radio frequency device runs normally, the first information may not include the software running information of the second radio frequency device.

Optionally, in S320, if the second radio frequency device determines that the link quality fault occurs in the first link, the first information includes the communication quality information of the first link. In S320, if the second radio frequency device determines that the link quality fault does not occur in the first link, the first information may not include the communication quality information of the first link.

It should be noted that the second radio frequency device may continuously collect the status information of the first optical module, the optical power of the first optical module, the hardware running information of the second radio frequency device, the software running information of the second radio frequency device, and the communication quality information of the first link. However, the first information sent by the second radio frequency device to the first radio frequency device does not include all information collected by the second radio frequency device.

For example, the first information may include information collected at a moment when the second radio frequency device determines that the first link is faulty, and/or include information collected at a moment when the second radio frequency device determines that the second radio frequency device is faulty. For example, the first information includes the status information of the first optical module, and the status information of the first optical module may be information collected at a moment when the second radio frequency device determines that the first link is faulty. To be specific, the status information of the first optical module indicates a status of the first optical module at the moment when the second radio frequency device determines that the first link is faulty. It should be noted that the moment at which the second radio frequency device determines that the first link is faulty may not be a moment at which the first link is faulty. It is possible that the second radio frequency device determines, only at a specific moment after the first link is faulty, that the first link is faulty. In addition, the moment at which the second radio frequency device determines that the second radio frequency device is faulty may not be a moment at which the second radio frequency device is faulty. It is possible that the second radio frequency device determines, only at a specific moment after the second radio frequency device is faulty, that the second radio frequency device is faulty.

For another example, the first information includes information collected by the second radio frequency device within a predefined time period. The predefined time period is from a first moment to the moment at which the second radio frequency device determines that the first link is faulty. The first moment is any moment before the moment at which the second radio frequency device determines that the first link is faulty. Alternatively, the predefined time period is from a first moment to the moment at which the second radio frequency device determines that the second radio frequency device is faulty. The first moment is any moment before the moment at which the second radio frequency device determines that the second radio frequency device is faulty.

Optionally, if S320 is performed in the method 300, the first information sent by the first radio frequency device to the second radio frequency device may include the fault cause of the second radio frequency device or indication information, where the indication information indicates that the second radio frequency device is not faulty.

For example, in S320, if the second radio frequency device determines that the second radio frequency device is not faulty, the first information may include the indication information. When the first link is faulty, it helps determine, based on the indication information, that the second radio frequency device is not faulty, so that it can be determined that the fault cause of the first link is that the control device is faulty or an optical link is faulty. The optical link between the second radio frequency device and the control device includes an optical fiber and a multiplexer/demultiplexer between the second radio frequency device and the control device.

For another example, in S320, if the second radio frequency device determines that the second radio frequency device is faulty, the first information may include the fault cause of the second radio frequency device. For example, if the second radio frequency device determines that the software of the second radio frequency device runs abnormally, the first information may include that the fault cause of the second radio frequency device is that the software of the second radio frequency device runs abnormally.

Optionally, in S320, if the second radio frequency device determines that the second radio frequency device is about to be faulty, and/or determines that the first link is about to be faulty, or the second radio frequency device determines, by monitoring the change of the voltage and/or the current, that the power failure is about to occur, in S310, the second radio frequency device may directly send the first information to the control device. The first information is for determining a cause of the fault that is about to occur in the second radio frequency device, and/or determining a cause of the fault that is about to occur in the first link.

In another possible implementation, in response to a second request message from the first radio frequency device, the second radio frequency device sends the first information to the first radio frequency device. For a manner in which in response to the second request message, the second radio frequency device sends the first information to the first radio frequency device, refer to descriptions in the following method 500.

S320: The first radio frequency device sends the first information to the control device or a management device.

The management device may be an operation and maintenance center (operation and maintenance center, OMC). The management device is configured to manage the control device, the first radio frequency device, and the second radio frequency device, and is responsible for planning, construction, maintenance, and optimization of the control device, the first radio frequency device, and the second radio frequency device. The management device may be provided by an operator to which the control device belongs, or may be provided by another operator different from the operator to which the control device belongs. This is not limited in this embodiment of this application.

After the first radio frequency device receives the first information from the second radio frequency device, if a link between the first radio frequency device and the control device is not faulty, the first radio frequency device may send the first information to the control device or the management device.

In a possible implementation, once receiving the first information, the first radio frequency device sends the first information to the control device or the management device.

In another possible implementation, in response to a first request message from the control device or the management device, the first radio frequency device sends the first information to the control device or the management device. For a manner in which in response to the first request message, the first radio frequency device sends the first information to the control device or the management device, refer to descriptions in the following method 500 to method 700.

In this embodiment of this application, the second radio frequency device may send the first information to the control device or the management device through the first radio frequency device whose link to the control device is not faulty, so that the control device or the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

Optionally, the method 300 further includes S340.

S340: The control device or the management device determines, based on the first information, the fault cause of the second radio frequency device and/or the fault cause of the link between the second radio frequency device and the control device.

For example, if the first information includes the status information of the first optical module, the control device or the management device determines, based on the status information of the first optical module, whether the first optical module is faulty. For a manner of determining, based on the status information of the first optical module, whether the first optical module is faulty, refer to the descriptions in S320. Further, if the control device or the management device determines that the first optical module is not faulty, the control device or the management device may determine that the fault cause of the second radio frequency device does not include that the first optical module is faulty, and the fault cause of the first link does not include that the first optical module is faulty either. If the control device or the management device determines that the first optical module is faulty, the control device or the management device may determine that the fault cause of the first link includes that the second radio frequency device is faulty, and the specific fault cause of the second radio frequency device includes that the first optical module is faulty.

For another example, if the first information includes the transmit optical power of the first optical module, the control device or the management device may determine, based on the transmit optical power of the first optical module, whether the transmit end of the first optical module is faulty. For a manner of determining, based on the transmit optical power of the first optical module, whether the transmit end of the first optical module is faulty, refer to the descriptions in S320. Further, if the control device or the management device determines that the transmit end of the first optical module is not faulty, the control device or the management device may determine that the fault cause of the second radio frequency device does not include that the transmit end of the first optical module is faulty, and the fault cause of the first link does not include that the transmit end of the first optical module is faulty either. If the control device or the management device determines that the transmit end of the first optical module is faulty, the control device or the management device may determine that the fault cause of the first link includes that the second radio frequency device is faulty, and the specific fault cause of the second radio frequency device includes that the transmit end of the first optical module is faulty.

For another example, if the first information includes the receive optical power of the first optical module, the control device or the management device may determine, based on the receive optical power of the first optical module, whether the receive end of the first optical module is faulty. For a manner of determining, based on the receive optical power of the first optical module, whether the receive end of the first optical module is faulty, refer to the descriptions in S320. Further, if the control device or the management device determines that the receive end of the first optical module is not faulty, the control device or the management device may determine that the fault cause of the second radio frequency device does not include that the receive end of the first optical module is faulty, and the fault cause of the first link does not include that the receive end of the first optical module is faulty either. If the control device or the management device determines that the receive end of the first optical module is faulty, the control device or the management device may determine that the fault cause of the first link includes that the second radio frequency device is faulty, and the specific fault cause of the second radio frequency device includes that the receive end of the first optical module is faulty.

For another example, if the first information includes the hardware running information of the second radio frequency device, the control device or the management device may determine, based on the hardware running information of the second radio frequency device, whether the hardware of the second radio frequency device is faulty. If the control device or the management device determines, based on the hardware running information of the second radio frequency device, that the hardware of the second radio frequency device runs normally, the control device or the management device may determine that the fault cause of the second radio frequency device does not include that the hardware of the second radio frequency device is faulty, and determine that the fault cause of the first link does not include that the hardware of the second radio frequency device is faulty. If the control device or the management device determines, based on the hardware running information of the second radio frequency device, that the hardware of the second radio frequency device runs abnormally, the control device or the management device may determine that the fault cause of the first link includes that the second radio frequency device is faulty, and the specific fault cause of the second radio frequency device includes that the hardware of the second radio frequency device is faulty.

For another example, if the first information includes the software running information of the second radio frequency device, the control device or the management device may determine, based on the software running information of the second radio frequency device, whether the software of the second radio frequency device is faulty. If the control device or the management device determines, based on the software running information of the second radio frequency device, that the software of the second radio frequency device runs normally, the control device or the management device may determine that the fault cause of the second radio frequency device does not include that the software of the second radio frequency device is faulty, and determine that the fault cause of the first link does not include that the software of the second radio frequency device is faulty. If the control device or the management device determines, based on the software running information of the second radio frequency device, that the software of the second radio frequency device runs abnormally, the control device or the management device may determine that the fault cause of the first link includes that the second radio frequency device is faulty, and the specific fault cause of the second radio frequency device includes that the software of the second radio frequency device is faulty.

For another example, if the first information includes the communication quality information of the first link, the control device or the management device may determine, based on the communication quality information, whether the optical link between the second radio frequency device and the control device is faulty. For example, if the packet loss rate of the first link exceeds the packet loss rate threshold, the transmission delay of the first link exceeds the delay threshold, the bit error rate of the first link exceeds the bit error rate threshold, or the optical attenuation of the first link exceeds the upper optical attenuation limit, the control device or the management device may determine that the optical link between the second radio frequency device and the control device is faulty. If the control device or the management device determines that the optical link between the second radio frequency device and the control device is faulty, the control device or the management device may determine that the fault cause of the first link includes that the optical link between the second radio frequency device and the control device is faulty.

For another example, if the first information includes the fault cause of the second radio frequency device, the control device or the management device may determine that the fault cause of the first link includes that the second radio frequency device is faulty.

For another example, if the first information includes the indication information, the control device or the management device may determine, based on the indication information, that the second radio frequency device is not faulty, to determine that the fault cause of the first link includes that the control device is faulty and/or the optical link between the second radio frequency device and the control device is faulty.

It should be noted that, in this embodiment of this application, the control device or the management device is not limited to determining the fault cause of the first link based only on the first information. In S340, the control device or the management device may determine the fault cause of the first link in combination with the first information and second information.

The second information is collected by the control device, and is for determining a fault cause of the control device and/or the fault cause of the first link. For example, the second information includes one or more of the following: status information of a second optical module deployed on the control device, optical power of the second optical module, hardware running information of the control device, software running information of the control device, and the communication quality information of the first link.

The status information of the second optical module is for determining whether the second optical module is faulty. The status information of the second optical module includes one or more of the following: a temperature of the second optical module, a voltage of the second optical module, and a current of the second optical module.

For example, if the temperature of the second optical module is lower than a lower temperature limit of the second optical module, and/or the temperature of the second optical module is higher than an upper temperature limit of the second optical module, the control device or the management device may determine that the second optical module is faulty. For another example, if the current of the second optical module is lower than a lower current limit of the second optical module, and/or the current of the second optical module is higher than an upper current limit of the second optical module, the control device or the management device may determine that the second optical module is faulty. For another example, if the voltage of the second optical module is lower than a lower voltage limit of the second optical module, and/or the voltage of the second optical module is higher than an upper voltage limit of the second optical module, the control device or the management device may determine that the second optical module is faulty. If the temperature of the second optical module is between the lower temperature limit of the second optical module and the upper temperature limit of the second optical module, the current of the second optical module is between the lower current limit of the second optical module and the upper current limit of the second optical module, and the voltage of the second optical module is between the lower voltage limit of the second optical module and the upper voltage limit of the second optical module, the control device or the management device may determine that the second optical module is not faulty.

Correspondingly, if the control device or the management device determines, based on the status information of the second optical module, that the second optical module is not faulty, the control device or the management device may determine that the fault cause of the control device does not include that the second optical module is faulty, and the fault cause of the first link does not include that the second optical module is abnormal. If the control device or the management device determines, based on the status information of the second optical module, that the second optical module is not faulty, the control device or the management device may determine that the fault cause of the first link includes that the control device is faulty, and the specific fault cause of the control device includes that the second optical module is faulty.

The optical power of the second optical module includes transmit optical power and receive optical power of the second optical module. The transmit optical power of the second optical module is power of an optical signal sent by the control device to the second radio frequency device through the second optical module, and the receive optical power of the second optical module is power of an optical signal received by the control device from the second radio frequency device through the second optical module. The transmit optical power of the second optical module is for determining whether a transmit end of the second optical module is faulty, and the receive optical power of the second optical module is for determining whether a receive end of the second optical module is faulty. For example, if the transmit optical power of the second optical module is lower than minimum output optical power of the second optical module, and/or if the transmit optical power of the second optical module is higher than maximum output optical power of the second optical module, the control device or the management device may determine that the transmit end of the second optical module is faulty. If the transmit optical power of the second optical module is between the minimum output optical power and the maximum output optical power of the second optical module, the control device or the management device may determine that the transmit end of the second optical module is not faulty. For another example, if the receive optical power of the second optical module is lower than minimum receive optical power of the second optical module, and/or if the receive optical power of the second optical module is higher than maximum receive optical power of the second optical module, the control device or the management device may determine that the receive end of the second optical module is faulty. If the receive optical power of the second optical module is between the minimum receive optical power and the maximum receive optical power of the second optical module, the control device or the management device may determine that the receive end of the second optical module is not faulty.

Correspondingly, if the control device or the management device determines that the transmit end of the second optical module is not faulty, the control device or the management device may determine that the fault cause of the control device does not include that the transmit end of the second optical module is faulty, and the fault cause of the first link does not include that the transmit end of the second optical module is faulty either. If the control device or the management device determines that the transmit end of the second optical module is faulty, the control device or the management device may determine that the fault cause of the first link includes that the control device is faulty, and the specific fault cause of the control device includes that the transmit end of the second optical module is faulty. If the control device or the management device determines that the receive end of the second optical module is not faulty, the control device or the management device may determine that the fault cause of the control device does not include that the receive end of the second optical module is faulty, and the fault cause of the first link does not include that the receive end of the second optical module is faulty either. If the control device or the management device determines that the receive end of the second optical module is faulty, the control device or the management device may determine that the fault cause of the first link includes that the control device is faulty, and the specific fault cause of the control device includes that the receive end of the second optical module is faulty.

The control device or the management device may further analyze, in combination with the optical power of the first optical module and the optical power of the second optical module, whether the fault cause of the first link includes that the optical link is faulty. For example, if a difference between the transmit optical power of the first optical module and the receive optical power of the second optical module is greater than a predetermined threshold, and/or if a difference between the transmit optical power of the second optical module and the receive optical power of the first optical module is greater than the predetermined threshold, the control device or the management device may determine that the fault cause of the first link includes that the optical link is faulty.

The hardware running information of the control device is running information of a hardware structure of the control device, and may specifically include a running parameter obtained when the hardware structure is run. For example, the hardware running information of the control device includes a running memory of the control device, a hardware temperature of the control device, an occupation rate of a flash chip of the control device, and a bad block rate of the flash chip of the control device. The hardware running information of the control device is for determining whether hardware of the control device runs abnormally.

Correspondingly, if the control device or the management device determines, based on the hardware running information of the control device, that the hardware of the control device runs normally, the control device or the management device may determine that the fault cause of the control device does not include that the hardware of the control device is faulty, and the fault cause of the first link does not include that the hardware of the control device is faulty. If the control device or the management device determines, based on the hardware running information of the control device, that the hardware of the control device runs abnormally, the control device or the management device may determine that the fault cause of the first link includes that the control device is faulty, and the specific fault cause of the control device includes that the hardware of the control device is faulty.

The software information of the control device is for determining whether software of the control device runs abnormally. For example, the software running information of the control device includes version information about running software, software version information supported by the control device, a CRC check result, alarm information indicating a file loss, and alarm information indicating software damage.

Correspondingly, if the control device or the management device determines, based on the software running information of the control device, that the software of the control device runs normally, the control device or the management device may determine that the fault cause of the control device does not include that the software of the control device is faulty, and the fault cause of the first link does not include that the software of the control device is faulty. If the control device or the management device determines, based on the software running information of the control device, that the software of the control device runs abnormally, the control device or the management device may determine that the fault cause of the first link includes that the control device is faulty, and the specific fault cause of the control device includes that the software of the control device is faulty.

FIG. 5 is a schematic flowchart of a method for determining a fault cause according to an embodiment of this application. The following describes in detail steps in the method 500.

S501: A control device sends a first request message to a first radio frequency device. Correspondingly, in S501, the first radio frequency device receives the first request message from the control device.

The first request message is for requesting the first radio frequency device to report first neighbor node information. The first neighbor node information is received by the first radio frequency device from a neighbor node of the first radio frequency device, and the first neighbor node information is for determining a fault cause of the neighbor node of the first radio frequency device and/or a fault cause of a link between the neighbor node of the first radio frequency device and the control device. The neighbor node of the first radio frequency device is a radio frequency device that is physically connected to the first radio frequency device and whose link to the control device is faulty. The neighbor node of the first radio frequency device includes a second radio frequency device, and the first neighbor node information includes first information.

For example, the first request message includes an identifier of the second radio frequency device, and the identifier of the second radio frequency device identifies the second radio frequency device. For example, the identifier of the second radio frequency device includes one or more of the following: an electronic serial number (electronic serial number, ESN) of the second radio frequency device, a cabinet number of a cabinet in which the second radio frequency device is located, a subrack number of a subrack in which the second radio frequency device is located, and a slot number of a slot in which the second radio frequency device is located. It may be understood that if the control device determines that a first link is faulty, and the control device obtains the identifier of the second radio frequency device, the first request message sent by the control device to the first radio frequency device may include the identifier of the second radio frequency device.

It may be understood that, when the first request message includes the identifier of the second radio frequency device, the first request message may be for requesting the first radio frequency device to report the first information.

It may be further understood that if the control device determines that a link between the control device and another radio frequency device is faulty, and the control device can obtain an identifier of the another radio frequency device, the first request message further includes the identifier of the another radio frequency device. For example, if the control device determines that a link between the control device and a third radio frequency device is faulty, and the control device obtains an identifier of the third radio frequency device, the first request message further includes the identifier of the third radio frequency device. When the first request message includes the identifier of the third radio frequency device, the first request message may further be for requesting the first radio frequency device to report third information, where the third information is for determining a fault cause of the third radio frequency device and/or a fault cause of the link between the third radio frequency device and the control device. For descriptions of the identifier of the third radio frequency device, refer to the descriptions of the identifier of the second radio frequency device.

For example, the first request message does not include an identifier of any radio frequency device. It may be understood that if the control device does not obtain the identifier of the second radio frequency device, the first request message sent by the control device does not include the identifier of any radio frequency device. Certainly, even if the control device may obtain the identifier of the second radio frequency device, the first request message may not carry the identifier of the second radio frequency device. This is not limited in this embodiment of this application.

If the first request message does not include the identifier of any radio frequency device, it indicates that the first request message is for requesting the first radio frequency device to report first neighbor node information received from all neighbor nodes, that is, for requesting the first radio frequency device to report first neighbor node information received from all radio frequency devices that are physically connected to the first radio frequency device and whose links to the control device are faulty.

A manner in which the control device sends the first request message to the first radio frequency device is not limited in this embodiment of this application.

For example, if the control device determines that the first link is faulty, and has known that the first radio frequency device is physically connected to the second radio frequency device, the control device sends the first request message to the first radio frequency device in a unicast manner. It may be understood that, in this implementation, only the first radio frequency device can receive the first request message.

For another example, if the control device determines that the first link is faulty, but does not know that the first radio frequency device is physically connected to the second radio frequency device, the control device sends the first request message in a broadcast manner. It should be understood that, in this implementation, all radio frequency devices whose links to the control device are not faulty may receive the first request message. For example, if a link between the first radio frequency device and the control device is not faulty, the first radio frequency device may receive the first request message. If a link between a fourth radio frequency device and the control device is not faulty either, the fourth radio frequency device may also receive the first request message.

It should be understood that, when the control device sends the first request message in the broadcast manner, the first request message is for requesting a radio frequency device that can receive the first request message to report neighbor node information. For example, when the first radio frequency device and the fourth radio frequency device receive the first request message, the first request message is for requesting the first radio frequency device to report the first neighbor node information, and the first request message is for requesting the fourth radio frequency device to report second neighbor node information. The second neighbor node information is received by the fourth radio frequency device from a neighbor node of the fourth radio frequency device, and the second neighbor node information is for determining a fault cause of the neighbor node of the fourth radio frequency device and/or a fault cause of a link between the neighbor node of the fourth radio frequency device and the control device. The neighbor node of the fourth radio frequency device is a radio frequency device that is physically connected to the fourth radio frequency device and whose link to the control device is faulty.

S502: In response to the first request message, the first radio frequency device sends a second request message. Correspondingly, in S502, the second radio frequency device receives the second request message from the first radio frequency device.

The second request message is for requesting the neighbor node of the first radio frequency device to report the first neighbor node information. The neighbor node of the first radio frequency device includes the second radio frequency device, and the first neighbor node information includes the first information. In other words, the second request message may be specifically for requesting the second radio frequency device to report the first information.

For example, the second request message includes the identifier of the second radio frequency device. Specifically, if the first request message received by the first radio frequency device includes the identifier of the second radio frequency device, the second request message sent by the first radio frequency device includes the identifier of the second radio frequency device.

It should be understood that, if the first request message received by the first radio frequency device further includes the identifier of the another radio frequency device, the second request message sent by the first radio frequency device may also include the identifier of the another radio frequency device. For example, if the first request message received by the first radio frequency device further includes the identifier of the third radio frequency device, the second request message sent by the first radio frequency device further includes the identifier of the third radio frequency device.

It should be further understood that if the first request message received by the first radio frequency device further includes the identifier of the another radio frequency device, but the first radio frequency device determines that the first radio frequency device is not physically connected to the another radio frequency device, the second request message sent by the first radio frequency device may not include the identifier of the another radio frequency device. For example, if the first request message includes the identifier of the third radio frequency device, but the first radio frequency device determines, based on the identifier of the third radio frequency device, that the first radio frequency device is not physically connected to the third radio frequency device, the second request message sent by the first radio frequency device does not include the identifier of the third radio frequency device.

For another example, the second request message does not include the identifier of any radio frequency device. Specifically, if the first request message received by the first radio frequency device does not include the identifier of any radio frequency device, the second request message sent by the first radio frequency device does not include the identifier of any radio frequency device either.

If the second request message does not include the identifier of any radio frequency device, the second request message is for requesting all neighbor nodes of the first radio frequency device to report first neighbor node information, that is, for requesting all radio frequency devices that are physically connected to the first radio frequency device and whose links to the control device are faulty to report first neighbor node information.

Optionally, the second request message further includes an identifier of the first radio frequency device. For the identifier of the first radio frequency device, refer to the foregoing descriptions of the identifier of the second radio frequency device.

A manner in which the first radio frequency device sends the second request message to the second radio frequency device is not limited in this embodiment of this application.

For example, if the first request message received by the first radio frequency device includes the identifier of the second radio frequency device, and the first radio frequency device determines that the first radio frequency device is physically connected to the second radio frequency device, the first radio frequency device may send the second request message to the second radio frequency device in a unicast manner. It may be understood that, in this implementation, only the second radio frequency device can receive the second request message.

For another example, if the first request message received by the first radio frequency device includes the identifier of the second radio frequency device, but the first radio frequency device does not determine whether the first radio frequency device is physically connected to the second radio frequency device, the first radio frequency device may send the second request message in a broadcast manner. Alternatively, if the first request message received by the first radio frequency device does not include the identifier of any radio frequency device, the first radio frequency device may send the second request message in the broadcast manner. It may be understood that, in this implementation, all radio frequency devices physically connected to the second radio frequency device may receive the second request message.

S503: The second radio frequency device sends the first information to the first radio frequency device. Correspondingly, in S503, the first radio frequency device receives the first information from the second radio frequency device.

For descriptions of the first information, refer to S310.

It may be understood that, if the first radio frequency device receives the first neighbor node information after sending the second request message, for example, receives the first information, it indicates that a radio frequency device that is physically connected to the first radio frequency device and whose link to the control device is faulty exists. Therefore, in other words, the second request message is for discovering the radio frequency device that is physically connected to the first radio frequency device and whose link to the control device is faulty.

Optionally, if the second radio frequency device determines that the second radio frequency device is faulty, and/or determines that the link between the second radio frequency device and the control device is faulty, the first information is sent to the first radio frequency device. In other words, before S503, the method 500 may further include S504: The second radio frequency device determines that the second radio frequency device is faulty and/or determines that the link between the second radio frequency device and the control device is faulty.

Specifically, for descriptions of S504, refer to the descriptions in S320. The link between the second radio frequency device and the control device is denoted as the first link below.

It should be noted that whether S504 is performed before S502 or after S502 is not limited in this embodiment of this application.

In a possible implementation, in S503, the second radio frequency device sends the first information to the first radio frequency device through a data transmission channel between the second radio frequency device and the first radio frequency device.

If the data transmission channel between the second radio frequency device and the first radio frequency device has not been established, before S503, the method 500 further includes S505 and S506.

S505: The second radio frequency device sends a response message of the second request message to the first radio frequency device. Correspondingly, in S505, the first radio frequency device receives the response message that is of the second request message and that is from the second radio frequency device.

The response message of the second request message includes the identifier of the second radio frequency device.

After the second radio frequency device receives the second request message from the first radio frequency device, if the second request message includes the identifier of the second radio frequency device, when determining that an identifier included in the second request message is consistent with the identifier of the second radio frequency device, the second radio frequency device sends the response message of the second request message to the first radio frequency device.

Optionally, if the second radio frequency device determines that the identifier included in the second request message is consistent with the identifier of the second radio frequency device, but the second radio frequency device determines that neither the second radio frequency device nor the first link is faulty, the second radio frequency device may not send the response message of the second request message to the first radio frequency device.

Optionally, if the identifier included in the second request message is inconsistent with the identifier of the second radio frequency device, but the second radio frequency device determines that the second radio frequency device and/or the first link are/is faulty, the second radio frequency device may also send the response message of the second request message to the first radio frequency device.

For another example, if the second request message does not include the identifier of any radio frequency device, the second radio frequency device sends the response message of the second request message to the first radio frequency device when determining that the second radio frequency device and/or the first link are/is faulty.

It may be understood that, if the first radio frequency device receives the response message of the second request message after sending the second request message, it indicates that the radio frequency device that is physically connected to the first radio frequency device and whose link to the control device is faulty exists. Therefore, in other words, the second request message is for discovering the radio frequency device that is physically connected to the first radio frequency device and whose link to the control device is faulty.

S506: The first radio frequency device establishes the data transmission channel with the second radio frequency device.

After receiving the response message that is of the second request message and that is from the second radio frequency device, the first radio frequency device initiates, based on the identifier of the second radio frequency device included in the response message of the second request message, a procedure of establishing the data transmission channel between the first radio frequency device and the second radio frequency device. For example, the data transmission channel between the first radio frequency device and the second radio frequency device is established based on a transmission control protocol (transmission control protocol, TCP). Specifically, for the procedure in which the first radio frequency device establishes the data transmission channel with the second radio frequency device based on the TCP protocol, refer to an existing protocol (for example, internet engineering task force (internet engineering task force, IETF) request for comments (request for comments, RFC) 793).

Optionally, in S502, if the second request message sent by the first radio frequency device to the second radio frequency device includes the identifier of the first radio frequency device, S505 may not be performed in the method 500. To be specific, after the second radio frequency device receives the second request message from the first radio frequency device, if the second radio frequency device determines that the second radio frequency device is faulty and/or determines that the first link is faulty, the second radio frequency device may not send the response message of the second request message to the first radio frequency device, but initiate the data transmission channel establishment procedure to the first radio frequency device based on the identifier of the first radio frequency device.

S507: The first radio frequency device sends the first information to the control device.

After receiving the first information from the second radio frequency device, in response to the first request message, the first radio frequency device sends the first information to the control device.

Optionally, the method 500 further includes S508, or the method 500 further includes S509 and S510.

S508: The control device determines, based on the first information, a fault cause of the second radio frequency device and/or a fault cause of the link between the second radio frequency device and the control device.

Specifically, for descriptions of S508, refer to S340.

S509: The control device sends the first information to a management device.

Optionally, in S509, the control device further sends second information to the management device. For descriptions of the second information, refer to S340.

S510: The management device determines, based on the first information, the fault cause of the second radio frequency device and/or the fault cause of the link between the second radio frequency device and the control device.

Specifically, for descriptions of S510, refer to S340.

In this embodiment of this application, if the control device determines that the link between the control device and the second radio frequency device is faulty, the first request message is sent to the first radio frequency device, so that in response to the first request message, the first radio frequency device may obtain the first information from the second radio frequency device, and send the first information to the control device. In this way, the control device or the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

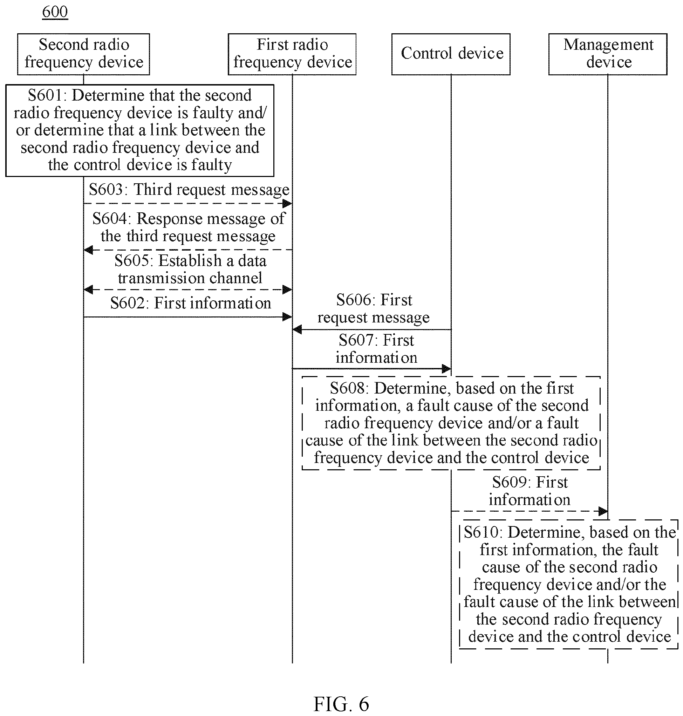

FIG. 6 is a schematic flowchart of a method for determining a fault cause according to an embodiment of this application. The following describes in detail steps in the method 600.

S601: A second radio frequency device determines that the second radio frequency device is faulty and/or determines that a link between the second radio frequency device and a control device is faulty.

Specifically, for descriptions of S601, refer to the descriptions in S320. The link between the second radio frequency device and the control device is denoted as a first link below.

S602: The second radio frequency device sends first information to a first radio frequency device. Correspondingly, in S602, the first radio frequency device receives the first information from the second radio frequency device.

For descriptions of the first information, refer to S310.

Optionally, if the second radio frequency device has known that a link between the first radio frequency device and the control device is not faulty, the second radio frequency device directly performs S602 after determining that the second radio frequency device is faulty and/or determining that the first link is faulty. If the second radio frequency device does not know a radio frequency device whose link to the control device is not faulty, the method 600 further includes S603 and S604.

S603: The second radio frequency device sends a third request message. Correspondingly, in S603, the first radio frequency device receives the third request message.

The third request message is for discovering the radio frequency device whose link to the control device is not faulty. Optionally, the third request message includes an identifier of the second radio frequency device. For descriptions of the identifier of the second radio frequency device, refer to S501.

A manner in which the second radio frequency device sends the third request message is not limited in this embodiment of this application.

For example, the second radio frequency device sends the third request message to the first radio frequency device in a unicast manner. It may be understood that, in this implementation, only the first radio frequency device may receive the third request message.

For another example, the second radio frequency device sends the third request message in a broadcast manner. It may be understood that, in this implementation, all radio frequency devices physically connected to the second radio frequency device may receive the third request message.

S604: The first radio frequency device sends a response message of the third request message to the second radio frequency device. Correspondingly, in S604, the second radio frequency device receives the response message that is of the third request message and that is from the first radio frequency device.

After receiving the third request message, if the first radio frequency device determines that the link between the first radio frequency device and the control device is not faulty, the first radio frequency device may send the response message of the third request message to the second radio frequency device. Optionally, the response message of the third request message includes an identifier of the first radio frequency device.

Correspondingly, after receiving the response message that is of the third request message and that is from the first radio frequency device, the second radio frequency device may determine that the link between the first radio frequency device and the control device is not faulty. Further, the second radio frequency device sends the first information to the first radio frequency device.

In a possible implementation, the second radio frequency device sends the first information to the first radio frequency device through a data transmission channel between the second radio frequency device and the first radio frequency device.

Optionally, if the data transmission channel between the second radio frequency device and the first radio frequency device has not been established, before S602, the method 600 further includes S605.

S605: The first radio frequency device establishes the data transmission channel with the second radio frequency device.

For example, the data transmission channel between the first radio frequency device and the second radio frequency device is established based on a TCP protocol. Specifically, for a procedure in which the first radio frequency device establishes the data transmission channel with the second radio frequency device based on the TCP protocol, refer to an existing protocol (for example, IETF RFC 793).

In this embodiment of this application, whether the first radio frequency device initiates the procedure of establishing the data transmission channel or the second radio frequency device initiates the procedure of establishing the data transmission channel is not limited.

Optionally, in S603, if the third request message sent by the second radio frequency device to the first radio frequency device includes the identifier of the second radio frequency device, in S605, the first radio frequency device may initiate, based on the identifier of the second radio frequency device, the procedure of establishing the data transmission channel.

Optionally, in S604, if the response message that is of the third request message and that is sent by the first radio frequency device to the second radio frequency device includes the identifier of the first radio frequency device, in S605, the second radio frequency device may initiate, based on the identifier of the first radio frequency device, the procedure of establishing the data transmission channel.

S606: The control device sends a first request message to the first radio frequency device. Correspondingly, in S606, the first radio frequency device receives the first request message from the control device.

Specifically, for descriptions of S606, refer to S501.

S607: The first radio frequency device sends the first information to the control device. Correspondingly, in S607, the control device receives the first information from the first radio frequency device.

In response to the first request message from the control device, the first radio frequency device sends the first information to the control device.

Optionally, the method 600 further includes S608, or the method 600 further includes S609 and S610.

S608: The control device determines, based on the first information, a fault cause of the second radio frequency device and/or a fault cause of the link between the second radio frequency device and the control device.

Specifically, for descriptions of S608, refer to S340.

S609: The control device sends the first information to a management device.

Optionally, in S609, the control device further sends second information to the management device. For descriptions of the second information, refer to S340.

S610: The management device determines, based on the first information, the fault cause of the second radio frequency device and/or the fault cause of the link between the second radio frequency device and the control device.

Specifically, for descriptions of S610, refer to S340.

In this embodiment of this application, if the second radio frequency device determines that the second radio frequency device is faulty and/or determines that the link between the control device and the second radio frequency device is faulty, the second radio frequency device may send the first information to the control device through the first radio frequency device whose link to the control device is not faulty, so that the control device or the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

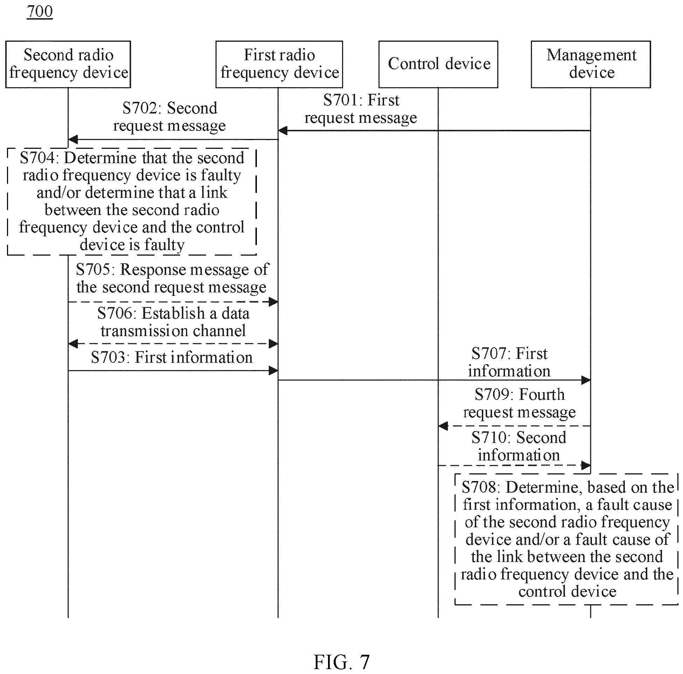

FIG. 7 is a schematic flowchart of a method for determining a fault cause according to an embodiment of this application. The following describes in detail steps in the method 700.

S701: A management device sends a first request message to a first radio frequency device. Correspondingly, in S701, the first radio frequency device receives the first request message from the management device.

A manner in which the management device sends the first request message to the first radio frequency device is the same as a manner in which a control device sends the first request message to the first radio frequency device. For brevity, details are not described in this embodiment of this application again.

S702 to S706 are the same as S502 to S506 in the method 500. For brevity, details are not described in this embodiment of this application again.

S707: The first radio frequency device sends the first information to the management device. Correspondingly, in S707, the management device receives the first information from the first radio frequency device.

After receiving the first information from the second radio frequency device, in response to the first request message, the first radio frequency device sends the first information to the management device.

Optionally, the method 700 further includes S708.

S708: The management device determines, based on the first information, the fault cause of the second radio frequency device and/or the fault cause of the link between the second radio frequency device and the control device.

Specifically, for descriptions of S708, refer to S340.

Optionally, the method 700 may further include S709 and S710.

S709: The management device sends a fourth request message to the control device.

Correspondingly, the control device receives the fourth request message from the management device.

The fourth request message is for requesting the control device to report second information.

For example, when determining that the link between the second radio frequency device and the control device is faulty, the management device sends the fourth request message to the control device.

For another example, after receiving the first information, the management device sends the fourth request message to the control device.

S710: The control device sends the second information to the management device. Correspondingly, in S710, the management device receives the second information from the control device.

In response to the fourth request message, the control device sends the second information to the management device.

It may be understood that, if S709 and S710 are performed in the method 700, the management device may determine, in combination with the first information and the second information, the fault cause of the link between the second radio frequency device and the control device.

In this embodiment of this application, if the management device determines that a link between the management device and the second radio frequency device is faulty, the first request message is sent to the first radio frequency device, so that in response to the first request message, the first radio frequency device may obtain the first information from the second radio frequency device, and send the first information to the management device. In this way, the management device may determine, based on the first information, the fault cause of the second radio frequency device and/or the fault cause of the link between the control device and the second radio frequency device. Because there is no need to manually detect, at a deployment location of the second radio frequency device, whether the second radio frequency device is faulty, manpower can be saved, and the fault cause of the second radio frequency device and/or the fault cause of the link between the second radio frequency device and the control device may be quickly determined. This helps quickly recover the link between the second radio frequency device and the control device.

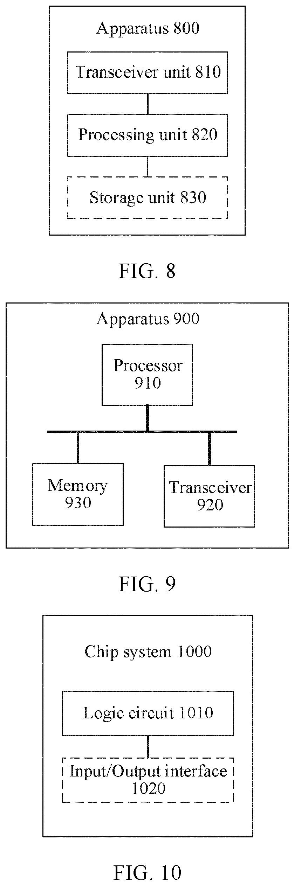

The foregoing describes in detail the methods provided in embodiments of this application with reference to FIG. 3 to FIG. 7. The following describes in detail apparatuses provided in embodiments of this application with reference to FIG. 8 to FIG. 10. It should be understood that the descriptions of the apparatus embodiments correspond to the descriptions of the method embodiments. Therefore, for content that is not described in detail, refer to the foregoing method embodiments. For brevity, details are not described herein again.

FIG. 8 is a schematic block diagram of an apparatus 800 according to an embodiment this application. As shown in the figure, the apparatus 800 may include a transceiver unit 810 and a processing unit 820.

In a possible design, the apparatus 800 may be the first radio frequency device in the foregoing method embodiment, or may be a chip configured to implement a function of the first radio frequency device in the foregoing method embodiment.

It should be understood that the apparatus 800 may correspond to the first radio frequency device in the method 300, the method 500, the method 600, or the method 700 according to embodiments of this application. The apparatus 800 may include a unit configured to perform the method performed by the first radio frequency device in the method 300 in FIG. 3, the method 500 in FIG. 5, the method 600 in FIG. 6, or the method 700 in FIG. 7. In addition, the units in the apparatus 800 and the foregoing other operations and/or functions are respectively used to implement corresponding procedures of the method 300 in FIG. 3, the method 500 in FIG. 5, the method 600 in FIG. 6, or the method 700 in FIG. 7. It should be understood that a specific process in which the units perform the foregoing corresponding steps has been described in detail in the foregoing method embodiments. For brevity, details are not described herein again.

In another possible design, the apparatus 800 may be the second radio frequency device in the foregoing method embodiment, or may be a chip configured to implement a function of the second radio frequency device in the foregoing method embodiment.

It should be understood that the apparatus 800 may correspond to the second radio frequency device in the method 300, the method 500, the method 600, or the method 700 according to embodiments of this application. The apparatus 800 may include a unit configured to perform the method performed by the second radio frequency device in the method 300 in FIG. 3, the method 500 in FIG. 5, the method 600 in FIG. 6, or the method 700 in FIG. 7. In addition, the units in the apparatus 800 and the foregoing other operations and/or functions are respectively used to implement corresponding procedures of the method 300 in FIG. 3, the method 500 in FIG. 5, the method 600 in FIG. 6, or the method 700 in FIG. 7. It should be understood that a specific process in which the units perform the foregoing corresponding steps has been described in detail in the foregoing method embodiments. For brevity, details are not described herein again.

In another possible design, the apparatus 800 may be the control device in the foregoing method embodiment, or may be a chip configured to implement a function of the control device in the foregoing method embodiment.

It should be understood that the apparatus 800 may correspond to the control device in the method 300, the method 500, the method 600, or the method 700 according to embodiments of this application. The apparatus 800 may include a unit configured to perform the method performed by the control device in the method 300 in FIG. 3, the method 500 in FIG. 5, the method 600 in FIG. 6, or the method 700 in FIG. 7. In addition, the units in the apparatus 800 and the foregoing other operations and/or functions are respectively used to implement corresponding procedures of the method 300 in FIG. 3, the method 500 in FIG. 5, the method 600 in FIG. 6, or the method 700 in FIG. 7. It should be understood that a specific process in which the units perform the foregoing corresponding steps has been described in detail in the foregoing method embodiments. For brevity, details are not described herein again.

In another possible design, the apparatus 800 may be the management device in the foregoing method embodiment, or may be a chip configured to implement a function of the management device in the foregoing method embodiment.

It should be understood that the apparatus 800 may correspond to the management device in the method 300, the method 500, the method 600, or the method 700 according to embodiments of this application. The apparatus 800 may include a unit configured to perform the method performed by the control device in the method 300 in FIG. 3, the method 500 in FIG. 5, the method 600 in FIG. 6, or the method 700 in FIG. 7. In addition, the units in the apparatus 800 and the foregoing other operations and/or functions are respectively used to implement corresponding procedures of the method 300 in FIG. 3, the method 500 in FIG. 5, the method 600 in FIG. 6, or the method 700 in FIG. 7. It should be understood that a specific process in which the units perform the foregoing corresponding steps has been described in detail in the foregoing method embodiments. For brevity, details are not described herein again.

It should be further understood that the transceiver unit 810 in the apparatus 800 may correspond to a transceiver 1020 in an apparatus 1000 shown in FIG. 10, and the processing unit 820 in the apparatus 800 may correspond to a processor 1010 in the apparatus 1000 shown in FIG. 10.

It should be further understood that when the apparatus 800 is a chip, the chip includes a transceiver unit and a processing unit. The transceiver unit may be an input/output circuit or a communication interface. The processing unit may be a processor, a microprocessor, or an integrated circuit that is integrated on the chip.

The transceiver unit 810 is configured to implement a signal transceiver operation of the apparatus 800, and the processing unit 820 is configured to implement a signal processing operation of the apparatus 800.

Optionally, the apparatus 800 further includes a storage unit 830, and the storage unit 830 is configured to store instructions.

FIG. 9 is a schematic block diagram of an apparatus 900 according to an embodiment this application. As shown in FIG. 9, the apparatus 900 includes at least one processor 910 and a transceiver 920. The processor 910 is coupled to a memory, and is configured to execute instructions stored in the memory, to control the transceiver 920 to send a signal and/or receive a signal. Optionally, the apparatus 900 further includes a memory 930, configured to store instructions.

It should be understood that the processor 910 and the memory 930 may be combined into one processing apparatus, and the processor 910 is configured to execute program code stored in the memory 930 to implement the foregoing functions. During a specific implementation, the memory 930 may alternatively be integrated into the processor 910, or may be independent of the processor 910.

It should be further understood that the transceiver 920 may include a receiver (or referred to as a receiver machine) and a transmitter (or referred to as a transmitter machine). The transceiver 920 may further include an antenna, and there may be one or more antennas. The transceiver 920 may be a communication interface or an interface circuit.

When the apparatus 900 is a chip, the chip includes a transceiver unit and a processing unit. The transceiver unit may be an input/output circuit or a communication interface. The processing unit may be a processor, a microprocessor, or an integrated circuit that is integrated on the chip.

FIG. 10 is a schematic diagram of a chip system according to an embodiment of this application. The chip system herein may alternatively be a system including a circuit. The chip system 1000 shown in FIG. 10 includes a logic circuit 1010 and an input/output interface (input/output interface) 1020. The logic circuit is configured to be coupled to the input interface, and transmit data (for example, first indication information) through the input/output interface, to perform the method in FIG. 3, FIG. 5, FIG. 6, or FIG. 7.

An embodiment of this application further provides a processing apparatus, including a processor and an interface. The processor may be configured to perform the method in the foregoing method embodiment.

It should be understood that the processing apparatus may be a chip. For example, the processing apparatus may be a field programmable gate array (field programmable gate array, FPGA), may be an application-specific integrated circuit (application-specific integrated circuit, ASIC), may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip.

In an implementation process, steps in the foregoing methods may be implemented by using a hardware integrated logic circuit in the processor or by using instructions in a form of software. The steps of the method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor. To avoid repetition, details are not described herein again.

It should be noted that the processor in this embodiment of this application may be an integrated circuit chip, and has a signal processing capability. In the implementation process, the steps in the foregoing method embodiments may be implemented by using the hardware integrated logic circuit in the processor, or by using the instructions in the form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logic block diagrams that are disclosed in embodiments of this application may be implemented or performed. The general-purpose processor may be a microprocessor, or the processor may be any conventional processor or the like.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache.

According to the method provided in embodiments of this application, this application further provides a computer program product. The computer program product includes computer program code. When the computer program code is run on a computer, the computer is enabled to perform the method in any one of the embodiments shown in FIG. 3, FIG. 5, FIG. 6, or FIG. 7.

According to the method provided in embodiments of this application, this application further provides a computer-readable medium. The computer-readable medium stores program code. When the program code is run on a computer, the computer is enabled to perform the method in any one of the embodiments shown in FIG. 3, FIG. 5, FIG. 6, or FIG. 7.

According to the method provided in embodiments of this application, this application further provides a system. The system includes the foregoing first radio frequency device, the second radio frequency device, and the control device. Optionally, the system further includes a management device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer instructions may be stored in a computer-readable storage medium, or may be transmitted from a computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disc (solid state disc, SSD)), or the like.

In several embodiments provided in this application, it should be understood that the disclosed system, apparatus, and method may be implemented in another manner. For example, the described apparatus embodiment is merely an example. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a fault cause, comprising:
receiving, by a first radio frequency device, first information from a second radio frequency device, wherein the first information is for determining a fault cause of the second radio frequency device and/or a fault cause of a link between the second radio frequency device and a control device; and
sending, by the first radio frequency device, the first information to the control device or a management device.

2. The method according to claim 1, wherein the second radio frequency device is connected to the first radio frequency device through a power cable or an optical fiber.

3. The method according to claim 1 or 2, wherein the method further comprises:
receiving, by the first radio frequency device, a first request message from the control device or the management device, wherein the first request message is for requesting to report the first information; and
in response to the first request message, sending, by the first radio frequency device, a second request message, wherein the second request message is for requesting the second radio frequency device to report the first information.

4. The method according to claim 3, wherein the first request message comprises an identifier of the second radio frequency device, and/or the second request message comprises the identifier of the second radio frequency device.

5. The method according to claim 3 or 4, wherein the second request message is sent in a broadcast manner.

6. The method according to claim 1 or 2, wherein the method further comprises:
receiving, by the first radio frequency device, a third request message from the second radio frequency device, wherein the third request message is for discovering a radio frequency device whose link to the control device is not faulty; and
in response to the third request message, sending, by the first radio frequency device, a response message of the third request message to the second radio frequency device.

7. The method according to claim 1 or 2, wherein the method further comprises:
receiving, by the first radio frequency device, a first request message from the control device or the management device, wherein the first request message is for requesting to report the first information; and
the sending, by the first radio frequency device, the first information to the control device or a management device comprises:
in response to the first request message, sending, by the first radio frequency device, the first information to the control device or the management device.

8. The method according to any one of claims 1 to 7, wherein the method further comprises:
establishing, by the first radio frequency device, a data transmission channel between the first radio frequency device and the second radio frequency device; and
the receiving, by a first radio frequency device, first information from a second radio frequency device comprises:
receiving, by the first radio frequency device, the first information through the data transmission channel.

9. The method according to any one of claims 1 to 8, wherein the first information comprises one or more of the following: status information of an optical module, optical power of the optical module, software running information of the second radio frequency device, hardware running information of the second radio frequency device, and communication quality information of the link between the second radio frequency device and the control device, wherein the optical module is deployed on the second radio frequency device.

10. The method according to any one of claims 1 to 9, wherein the first information comprises the fault cause of the second radio frequency device or indication information indicating that the second radio frequency device is not faulty.

11. A method for determining a fault cause, comprising:
sending, by a second radio frequency device, first information to a first radio frequency device, wherein the first information is for determining a fault cause of the second radio frequency device and/or a fault cause of a link between the second radio frequency device and a control device.

12. The method according to claim 11, wherein the second radio frequency device is connected to the first radio frequency device through a power cable or an optical fiber.

13. The method according to claim 11 or 12, wherein the method further comprises:
determining, by the second radio frequency device, that the second radio frequency device is faulty and/or the link between the second radio frequency device and the control device is faulty.

14. The method according to any one of claims 11 to 13, wherein the method further comprises:
receiving, by the second radio frequency device, a second request message from the first radio frequency device, wherein the second request message is for requesting to report the first information.

15. The method according to any one of claims 11 to 13, wherein the method further comprises:
sending, by the second radio frequency device, a third request message, wherein the third request message is for discovering a radio frequency device whose link to the control device is not faulty; and
receiving, by the second radio frequency device, a response message that is of the third request message and that is from the first radio frequency device.

16. The method according to any one of claims 11 to 15, wherein the method further comprises:
establishing, by the second radio frequency device, a data transmission channel between the second radio frequency device and the first radio frequency device; and
the sending, by a second radio frequency device, first information to a second radio frequency device comprises:
sending, by the second radio frequency device, the first information to the second radio frequency device through the data transmission channel.

17. The method according to any one of claims 11 to 16, wherein the first information comprises one or more of the following: status information of an optical module, optical power of the optical module, software running information of the second radio frequency device, hardware running information of the second radio frequency device, and communication quality information of the link between the second radio frequency device and the control device, wherein the optical module is deployed on the second radio frequency device.

18. The method according to any one of claims 11 to 17, wherein the first information comprises the fault cause of the second radio frequency device or indication information indicating that the second radio frequency device is not faulty.

19. A method for determining a fault cause, comprising:
receiving first information from a first radio frequency device, wherein the first information is for determining a fault cause of a second radio frequency device and/or a fault cause of a link between the second radio frequency device and a control device; and
determining, based on the first information, the fault cause of the second radio frequency device and/or the fault cause of the link between the second radio frequency device and the control device.

20. The method according to claim 19, wherein the second radio frequency device is connected to the first radio frequency device through a power cable or an optical fiber.

21. The method according to claim 19 or 20, wherein the method further comprises:
sending a first request message to the first radio frequency device, wherein the first request message is for requesting to report the first information.

22. The method according to claim 21, wherein the sending a first request message to the first radio frequency device comprises:
sending the first request message to the first radio frequency device when it is determined that the link between the second radio frequency device and the control device is faulty.

23. The method according to claim 21 or 22, wherein the first request message comprises an identifier of the second radio frequency device.

24. The method according to any one of claims 19 to 23, wherein the first information comprises one or more of the following: status information of an optical module, optical power of the optical module, software running information of the second radio frequency device, hardware running information of the second radio frequency device, and communication quality information of the link between the second radio frequency device and the control device, wherein the optical module is deployed on the second radio frequency device.

25. The method according to any one of claims 19 to 24, wherein the first information comprises the fault cause of the second radio frequency device or indication information indicating that the second radio frequency device is not faulty.

26. An apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 10.

27. An apparatus, comprising at least one processor, wherein the at least one processor is coupled to at least one memory, and the at least one processor is configured to execute a computer program or instructions stored in the at least one memory, to enable the apparatus to perform the method according to any one of claims 11 to 18.

28. An apparatus, comprising at least one processor, wherein the at least one processor is coupled to at least one memory, and the at least one processor is configured to execute a computer program or instructions stored in the at least one memory, to enable the apparatus to perform the method according to any one of claims 19 to 25.

29. An apparatus, comprising a unit configured to implement the method according to any one of claims 1 to 10.

30. An apparatus, comprising a unit configured to implement the method according to any one of claims 11 to 18.

31. An apparatus, comprising a unit configured to implement the method according to any one of claims 19 to 25.

32. A computer-readable storage medium, wherein the computer-readable storage medium stores a computer program, and when the computer program is executed, the method according to any one of claims 1 to 25 is performed.

33. A computer program product, comprising a computer program, wherein when the computer program is executed, the method according to any one of claims 1 to 25 is performed.

34. A system, comprising the apparatus according to claims 26 to 28, or comprising the apparatus according to claims 29 to 31.
